Europäisches Patentamt

European Patent Office

Office européen des brevets

(11) Publication number: **0 489 982 A1**

## EUROPEAN PATENT APPLICATION

(21) Application number: **90203335.6**

(22) Date of filing: **12.12.90**

(51) Int. Cl.5: **C05G 3/04**

(43) Date of publication of application:
**17.06.92 Bulletin 92/25**

(84) Designated Contracting States:
**AT BE CH DE DK ES FR GB GR IT LI LU NL SE**

(71) Applicant: **KANSAI ENGINEERING CO., LTD**
**No. 47-3, Imazatofukeno-cho**
**Nagaokakyo-shi, Kyoto-fu(JP)**
Applicant: **TAGUCHI TECHNICAL**
**LABORATORY INC.**
**No. 11-5, Nihonbashi-muromachi 1-chome**
**Chuo-ku, Tokyo(JP)**

(72) Inventor: **Sasae, Taiichio**
**No. 47-3, Imazatofukeno-cho**
**Nagaokakyo-shi, Kyoto-fu(JP)**
Inventor: **Taguchi,Yoshio**
**No. 2-6-309, Kamitakaido 1-chome**
**Suginami-ku, Tokyo(JP)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Material for cultivation soils and method of manufacturing thereof.

(57) A material for cultivation soils having a continuous porous structure comprising combustion ash and carbon powder in which electrostatic charges are desorbed and neutralized and ettringite crystals for coagulating to connect the particles of the combustion ash and the carbon powder to each other, and the continuous porous structure comprising relatively large holes and smaller pores for connecting the holes to each other. The material for cultivation soils is produced by mixing the combustion ash and the carbon powder in which electrostatic charges are desorbed and neutralized, with either one of cement or calcium hydroxide, potassium chloride, magnesium chloride, sodium chloride, calcium chloride, sodium nitrate, ferric chloride, citric acid, cobalt chloride and water and then drying them.

EP 0 489 982 A1

BACKGROUND OF THE INVENTION

Field of the Invention

The present invention concerns a material for cultivation soils used for the cultivation of various kinds of plants by effectively utilizing burnt ashes, for example, of various kinds of dusts such as sewage sludges and coals, as well as a method of manufacturing such material.

Description of the Prior Art

Plants biologically combine gaseous carbon dioxide in atmospheric air with water and nutrients in soils with the aid of solar energy and they basically rely the source of nutrients and water on the soils for forming organic living bodies. Soil particles have positive and negative electric charges which strongly adsorb molecules of water around them almost immovably. At the periphery of the adsorbed molecule of water, there are also present membranes of water which are adsorbed with a less strong attracting force as free water. Since molecules of the free water are bound through hydrogen bonds and movable, plants release organic acids from roots and absorb free water by eliminating electrostatic charges and intake nutrients from the soils at the same time. Plants require a great amount of nitrogen, phosphoric acid, potassium, calcium, magnesium and sulfur and, in addition, absorb small amount of nutrients comprising more than 40 elements as minor nutrient elements. The elements are absorbed not directly but in the form of their cations and anions.

Further, gas exchange is taken place between soils and atmospheric air, in which oxygen is consumed by the biological activity of living organisms such as respiration of roots and decomposition of organic materials, to evolve carbon dioxide. As a result, oxygen is diffused from the atmospheric air into the soils, while carbon dioxide is diffused from the soils into the atmospheric air. For aerobic microorganisms, it is preferred that the soils are porous in order that they can easily grow by respiration. Respiration of the aerobic microorganisms oxidizes saccharides into gaseous carbon dioxide and water, nitrogen into nitric acid and phosphorus into phosphoric acid. If plants can grow due to their ability of fixing gaseous carbon dioxide by utilizing the solar energy and forming organic materials starting from inorganic materials. Their roots requires pores for the elongation and oxygen for the respiration, and gaseous carbon dioxide formed as a result of respiration of the roots has to be released above the ground not being accumulated. The roots of plants have pores for gas exchange and repeat the cycle of using oxygen for respiration by diffusion through the cells of the roots, accumulating nutrient ions in the plants for the synthesis of organic materials and releasing energy by the aspiration. With the reason as described above, air is incorporated into water in water culture. Atmospheric air contains about 79% of nitrogen and 21% of oxygen together with 0.03% of gaseous carbon dioxide each by volume ratio. Since the roots of plants consume oxygen to evolve gaseous carbon dioxide as described above, the concentration of gaseous carbon dioxide in the air contained in the soils is from 10 to 100 times as high as that in the atmospheric air. Accordingly, if the gas permeability of the soils is poor, supply of oxygen is interrupted to bring about lack of oxygen and cause damage by the accumulated gaseous carbon dioxide. In addition, if water drainage is poor, a water saturation state would continue to result in lack of oxygen as well. Since the diffusion rate of oxygen in water is only 1/1000 compared with that in air and, if the oxygen diffusion rate in the roots of plants is reduced to less than $20 \times 10^{-8}$ g, oxygen becomes insufficient to whither the plants. Soils need plowing for this reason.

Along with the economical development, labor-saving has been demanded recently for the cultivation of various kinds of plants such as field crops and only the chemical fertilizers or growth promotors are used instead of preparing composts, scattering ashes and plowing soils.

However, it has been well-known that microelements and minerals in the soils are adsorbed and leached by the use of versatile chemical fertilizers and this results in the degradation of the soil quality. Since moulds, bacteria and virus, which are microorganisms harmful to plants, get energy necessary for synthesizing organic materials by oxidizing inorganic materials as minor elements, they lead to lack of minor elements or aerobic bacteria. Harmful bacteria parasitic to plants are heteropolyc microorganisms (aerophobic microorganisms) and live on the oxidation energy derived from oxygen in organic materials. Since the heteropolyc microorganisms are sensitive to heavy metals as microelements, if they are removed by the adsorption of chemical fertilizers, this is prevented by agricultural chemicals. This vicious cycle results in the degradation of soil quality and brings about replant failure and solid acidification. In addition, gas permeability and drainage in the soils can no more be kept satisfactory to reduce the growing efficiency. Further, since a great amount of fertilizers are applied, about 80% of them are not absorbed from

EP 0 489 982 A1

the roots of plants but released as they are into rivers and brings about eutrophication. In addition, agricultural chemicals containing a lot of heavy metals are discharged into rivers and result in a major cause for circumstantial pollution.

The present inventors have made various studies from long since on materials for cultivation soils capable of improving soils which are not suitable to the growth of various kinds of plants such as field crops, soils under acidification or soils lacking in microelements due to replant failures such that the soils become suitable to the growth of plants, by mixing the material for cultivation soils, as well as capable of serving by themselves without using existent soils for the cultivation of various kinds of plants, thereby enabling to prevent replant failure, minimize plant diseases and attain outstandingly excellent growing state as compared with usual cases, economizing fertilizers and, further, capable of preventing eutrophication of rivers caused by the leaching of a great amount of fertilizers and the occurrence of circumstantial pollutions caused by the leaching of heavy metals contained in a great amount of agricultural chemicals.

OBJECT OF THE INVENTION

It is, accordingly, an object of the present invention to provide a useful material for cultivation soils as described above.

Another object of the present invention is to provide a method of manufacturing the material for cultivation soils as described above simply and effectively.

SUMMARY OF THE INVENTION

The foregoing object of the present invention can be attained by a material for cultivation soils comprising a continuous porous structure containing burnt ashes and carbon powder in which electrostatic charges are desorbed and neutralized and ettringite crystals coagulating to connect the particles of the burnt ashes and the carbon powder to each other and in which continuous porous structure comprises relatively large holes and small pores connecting the holes.

In the material for cultivation soils according to the present invention, the burnt ashes and the carbon powder contain ammonium chloride and potassium chloride for desorbing and neutralizing electrostaic charges, and the ettringite crystals are formed from either one of cement and lime, potassium chloride, magnesium chloride, sodium chloride, calcium chloride, sodium sulfate, ferric chloride, citric acid and cobalt chloride.

A preferred blending ratio of them, on the weight bases of the burnt ash, is from 3 to 50% of carbon powder, from 2 to 30% of cement or lime, from 0.04 to 0.05 % of ammonium chloride, from 0.07 to 0.095 % of potassium chloride, from 0.015 to 0.02 % of magnesium chloride, from 0.015 to 0.02 % of sodium chloride, from 0.015 to 0.02 % of calcium chloride, from 0.001 to 0.002 % of sodium sulfate, from 0.0005 to 0.002 % of ferric chloride, from 0.0005 to 0.002 % of citric acid and from 0.0001 to 0.0002 % of cobalt chloride.

In another embodiment of the material for cultivation soils according to the present invention, nitrogen, phosphorus and potassium are partially incorporated as a portion of the tissue of the continuous porous structure and also partially adsorbed physically to the continuous porous structure.

In this modified material for cultivation soils, a preferred blending ratio of them, on the weight basis of the burnt ash, is from 3 to 50% of carbon powder, from 2 to 30% of cement or lime, from 0.04 to 0.05 % of ammonium chloride, from 0.07 to 0.095 % of potassium chloride, from 0.015 to 0.02 % of magnesium chloride, from 0.015 to 0.02 % of sodium chloride, from 0.015 to 0.02 % of calcium chloride, from 0.001 to 0.002 % of sodium sulfate, from 0.0005 to 0.002 % of ferric chloride, from 0.0005 to 0.002 % of citric acid from 0.0001 to 0.0002 % of cobalt chloride, from 0.1 to 1 % of nitrogen, from 0.1 to 2 % of phosphorus and from 0.1 to 2 % of potassium.

It is preferred that the tissue in in each of the materials for cultivation soils according to the present invention comprises from 40 to 60 % of $SiO_2$, from 10 to 30 % of $Al_2O_3$, from 10 to 30 % of $CaO$, from 2 to 3 % of $MgO$, from 3 to 10 % of $Na_2O$ by weight ratio, the diameter for each of the holes and the pores is within a range from 5 to 7000 Å and the specific surface area is within a range from 30 to 150 $m^2/g$.

The material for cultivation soils according to the present invention as described above can be produced by a method of mixing burnt carbon ashes and carbon powder in which electrostatic charges are desorbed and neutralized, with either one of cement or lime, potassium chloride, magnesium chloride, sodium chloride, calcium chloride, sodium nitrate, ferric chloride, citric acid and cobalt chloride together with water and drying them, thereby forming a continuous porous structure comprising relatively large holes and small pores connecting the holes to each other.

3

For removing electrostatic charges from the burnt ashes and the carbon powder and neutralizing them, it is preferred to use an aqueous solution of ammonium chloride and potassium chloride and mix then, by the weight ratio, from 0.04 to 0.05 % of ammonium chloride, from 0.04 to 0.006 % of potassium chloride and from 15 to 25 % of water based on the burnt ashes and the carbon powder.

It is preferred to mix from 2 to 30 % of either one of cement or lime, from 0.03 to 0.035 % of potassium chloride, from 0.015 to 0.02 % of magnesium chloride, from 0.015 to 0.02 % of sodium chloride, from 0.015 to 0.02 % of calcium chloride, from 0.001 to 0.002 % of sodium sulfate, from 0.0005 to 0.002 % of ferric chloride, from 0.0005 to 0.002 % of citric acid, from 0.0001 to 0.0002 % of cobalt chloride and 15 to 25 % of water, based on the burnt ashes and the carbon powder in which the electrostatic charges are desorbed and neutralized.

In a modified method for producing the material for cultivation soils according to the present invention, burnt ashes and a carbon powder in which electrostatic charges are desorbed and neutralized are mixed with either one of element or lime, potassium chloride, magnesium chloride, sodium chloride, calcium chloride, sodium sulfate, ferric chloride, citric acid and cobalt chloride, as well as nitrogen, phosphorus and potassium together with water upon preparing the continuous porous structure.

In this case, it is preferred to mix from 2 to 30 % of either one of cement or lime, from 0.03 to 0.035 % of potassium chloride, from 0.015 to 0.02 % of magnesium chloride, from 0.015 to 0.02 % of sodium chloride, from 0.015 to 0.02 % of calcium chloride, from 0.001 to 0.002 % of sodium sulfate, from 0.0005 to 0.002 % of ferric chloride, from 0.0005 to 0.002 % of citric acid and from 0.0001 to 0.0002 % of cobalt chloride, from 0.1 to 1 % of nitrogen, from 0.1 to 2 % of phosphorus, from 0.1 to 2 % of potassium and from 15 to 25 % of water, each on the weight basis, to the burnt ashes and the carbon powder in which electrostatic charges are desorbed and neutralized.

As the burnt ash, various kinds of burnt ashes such as incineration ashes of sewage sludges or coal burnt ashes can be used. The size of the burnt ash and the carbon powder is preferably less than 1 mm and portland cement or other various cements can be used as the cement.

The ettringite $(Ca_6 Al_{12}(SO_4)_3(OH)_{12}.25H_2O)$ crystals are formed mainly from calcium components of cement or lime and each of the particles of $SiO_2$, $Al_2O_3$, $MgO$, $K$, $Na$ and $C$ as the main ingredients for the various kinds of burnt ashes can be coagulated to each other thereby obtaining a honeycomb-like continuous porous structure in which relatively large holes (macro apertures) are connected with smaller pores (micro apertures) into a net-like configuration. Then, $SiO_4$ tetrahedrons are arranged on a 2-dimensional network such that three oxygen atoms at the bottom of the Si tetrahedron are owned in common with other adjacent tetrahedrons and each of remaining oxygen atoms at the top are directed to one identical side which are bonded to each other by way of Al and cations such as $Ca^{++}$, $K^+$, $Mg^+$, $Na^+$, $Fe^+$ as the ingredient for various kinds of constituent materials. Cations put between two sheets form an octahedron surrounded with four oxygen atoms at the top and additionally incorporated two hydroxy groups. The thus obtained fundamental structure includes tetrahedrons and octahedrons to constitute an aluminosilicate compound providing negative static charges by the substitution of Si with Al in the tetrahedron or substitution of tri- or bivalent cations in the octahedron form. Then, microelements such as potassium and magnesium required for the growth of plants constitute a portion for the tissue of the continuous porous structure and, if necessary, a portion of nitrogen, phosphorus and potassium required for the growth of plants, forms a part of the tissue of the continuous porous structure and the other portion of nitrogen, phosphorus and potassium is physically adsorbed to the continuous porous structure.

In the production, if the amount of ammonium chloride is less than 0.04 %, it is difficult to reduce electrostatic charges between particles of the burnt ash and the carbon powder. On the other hand, if it is greater than 0.05 %, the strength of the continuous porous structure is deteriorated after the production. Ammonium chloride also has a function of reacting with and removing fumic acid that hinders the solidification in the case of using cement. If the amount of calcium chloride including that used for the desorption electrostatic charges and neutralization of the particles of the burnt ash and the carbon powder is less than 0.07 %, it lacks in the performance intruding to calcium ions of the cement or lime, burnt ash and carbon particles. On the other hand, if it is greater than 0.095 %, it becomes less soluble and the effect of giving permeability of calcium ions is not improved. If magnesium chloride is less than 0.015 %, shrinking cracks are developed in the continuous porous structure. On the other hand, if it is more than 0.02 %, the continuous porous structure is swollen. If sodium chloride is less than 0.015 %, permeability of the calcium ions of the cement or lime is poor. On the other hand, if it is more than 0.02 %, it is less soluble and the effect of providing the permeability to the calcium ions is not improved. Calcium chloride has an effect of shortening the coagulation time and, if it is less than 0.15 %, early strength can not be obtained. On the other hand, if it is more than 0.02 %, reduction of strength occurs due to water bleeding. If sodium sulfate is less than 0.001 %, cement or lime can not be cured rapidly. On the other hand, if it is more than 0.002 %, stability for long time strength is deteriorated due to nutralization of calcium ions. If ferric chloride is less than 0.0005 %, the amount of iron ions in the resultant continuous porous structure is reduced. On the other hand, if it is more than 0.002 %, the amount as the microelement becomes excessive, as well as it also brings about swelling. Inorganic metal salts as described above become easily soluble to water by the addition of citric acid and, if it is less than 0.0005 %, various kinds of the metal salts become less soluble. On the other hand, if it is more than 0.002 %, the strength of the continuous porous structure is deteriorated. Use of cobalt chloride can make the reaction vigorous and finely arrange the bonding between the particles. If it is less than 0.0001 %, various kinds of ionic reactions can not become vigorous. On the other hand, if it is more than 0.0002 %, the effect is not improved but rather it becomes expensive. Further, it is preferred that the amount of the carbon powder is from 3 to 50 % and the amount of cement or lime is from 2 to 30 % based on the weight of the burnt ash.

If the amount for each of nitrogen, phosphorus and potassium is less than 0.1 %, it is not sufficient as the fertilizers for the plants. On the other hand, if their amounts are more than 1 %. 2 %, 2 % respectively, no well -balanced plant growth is obtainable, for example, only the leaves are grown remarkably while seeds are not grown at all.

The burnt ash and the carbon powder are mixed, to which an aqueous solution of potassium chloride and ammonium chloride is further added and mixed by using a usual mixer. After the completion of the charge desorbing step as a primary treatment, either of cement or lime is mixed with the dried starting material, to which is further added an aqueous solution of potassium chloride, magnesium chloride, sodium chloride, calcium chloride, sodium nitrate, ferric chloride, citric acid and cobalt chloride and, if necessary, an aqueous solution of nitrogen, phosphorus and potassium. Then, they are pelletized under mixing in a rolling pelletizer or various kinds of pelletizers. The grain size can optionally be controlled depending on the mixing time and it is preferable to control the size of pellets to 2 - 10 mm as the actual product. However, the grain size and the shape of the product are not particularly limited. There is also no particular limit for the temperature but a moderate humidity is required during culture since cement or lime is used and the mixing has to be applied at a temperature lower than 80°C in the case of using cement and at a temperature lower than 200°C in the case of using lime.

It has been found that since drying can promote the solidifying reaction, satisfactory products can be obtained by applying drying culture under appropriate temperature and humidity.

The material for cultivation soils according to the present invention comprises burnt ashes and carbon powder and ettringite crystals for coagulating to connect the particles of them into a honeycomb-like continuous porous structure in which relatively large holes (macro apertures) are connected continuously with smaller pores (micro apertures) in a network-like structure. The material electrically traps cations of minor elements contained in the material required for the growth of plants and, if necessary, also contain nitrogen, phosphorus and potassium in the tissue and in a state adsorbed thereon. Accordingly, the material is highly permeable to water or air and can improve the water retainability. In addition, other fertilizers, etc. can be adsorbed physically to prevent them from leaching. Then, when roots of plants release organic acids and absorb free water around the scarcely movable molecules of water by eliminating static charges, they can absorb microelements, fertilizers and oxygen. Further, since the material for cultivation soils has an air permeability, it can prevent the onset of aerophobic bacteria. Further, since the burnt ash, carbon powder, cement or lime, alkali metal and alkaline earth metal are used, the base substitution capacity is extremely great to facilitate the absorption of nutrients into the plants. When bases adsorbed on soils or clays are leached out, $H^+$ or $Al^{3+}$ are retained instead of the base ions to the exchange groups, thereby preventing the soils from becoming into acidic soils with lower base saturation degree. Further, since the particles of the burnt ash and the carbon powder are coagulated to each other by means of acicular crystals such as of ettringite and agglomerated into a honeycomb-like continuous porous structure, the specific surface area is increased. Accordingly, even if heavy metals in the agricultural chemicals invade being dissolved in water, they can exchange and adsorb the metals and, in addition, carbon can adsorb fatty acids in the agricultural chemicals thereby preventing them from leaching.

Further, the material for cultivation soils according to the present invention can be manufactured by merely mixing the burnt ash, carbon powder, one of cement or lime and various kinds of mixing agents in an aqueous solution and drying them.


DESCRIPTION OF THE ACCOMPANYING DRAWINGS

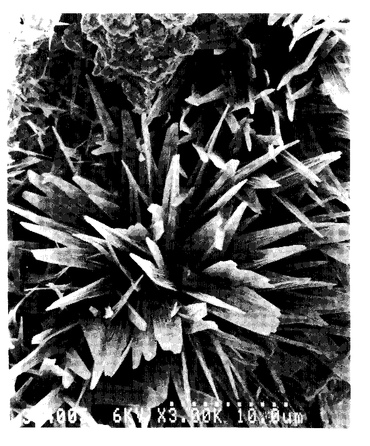

The drawing is a scannind electron microscopic photograph illustrating ettringite crystals in the material for cultivation soils of one preferred embodiment according to the present invention.

EXAMPLE

The present invention will now be described referring to examples.

Example 1

100 kg of carbon powder, 0.45 kg of ammonium chloride, 0.6 kg of potassium chloride and 200 kg (liter) of water were added to 1000 kg of combustion ashes (incineration ash of sewage sludges), mixed and dried to desorb and neutralize electrostatic charges of the combustion ash and the carbon powder. The powder mixture of the combustion ash and carbon used herein had the following physical properties:

| Grain Size Distribution | |
|---|---|
| Silt fraction (0.074 - 0.005 mm) | 69.3 % |
| Clay content (less than 0.005 mm) | 30.7 % |
| Maximum grain size | 1 mm |
| 80 % grain size | 1 mm |
| 30 % grain size | 420 um |
| Specific gravity of grain (GS) | 2.7 g/cm$^3$ |
| Wet density (Pt) | 1.0 g/cm$^3$ |
| Dry density (Pd) | 0.8 g/cm$^3$ |
| Porosity ratio (e) | 2 |
| Saturation degree (Sr) | 30 % |

(Pt, Pd, e, Sr, respectively, show the values at the optimum water content ratio)

| Consistency | |
|---|---|
| Liquid limit (WL) | 30 % |
| Plasticity limit (Wp) | 15 % |
| Plasticity index (Ip) | 15 % |

The powder mixture of the combustion ash and the carbon in which the electrostatic charges were desorbed and neutralized obtained by the method as described above was used and mixed with the following blending ratio in a mixer (omney mixer) and then pelletized by using a pan type pelletizer (manufactured by Daiichi Nenryo Co.).

| Mixed powder applied with charge desorption | 1000 kg |
|---|---|
| Cement | 150 kg |
| Potassium chloride | 0.3 kg |
| Magnesium chloride | 0.2 kg |
| Sodium chloride | 0.2 kg |
| Potassium chloride | 0.2 kg |
| Sodium sulfate | 0.017 kg |
| Ferric chloride | 0.017 kg |
| Citric acid | 0.015 kg |
| Cobalt chloride | 0.001 kg |
| Water | 200 kg (1) |

Then, cement was at first admixed to the powder mixture applied with electrostatic charge desorption and, subsequently, ingredients other than the cement previously dissolved in water were added and they were pelletized in a pan type pelletizer to obtain inorganic material for cultivation soils in the form of a continuous porous structure. The inorganic material for cultivation soils in the form of a continuous porous structure had the following property. The state of growth of ettringite crystals in this example is shown by a scanning type electron microscopic photograph in the appended drawing.

Property

Specific gravity (apparent specific gravity in a spontaneously dried state)        $0.8 \ g/cm^3$

Specific surface area        $50 \ m^2/g$

Chemical Ingredient of Tissue

$SiO_2$        60 %

$Al_2O_3$        15 %

CaO        20 %

MgO        2 %

$Na_2O$        3 %

Test Example

Spinach, sunny lettuce and honewort were cultivated in the material for cultivation soils obtained in Example 1 of the present invention and in ordinary soils as Comparative Example 1 by using a customarily used fertilizer: Hyponex (trade name) in any of the test cases and the amount of yield was compared between them. The results are as shown in Table 1.

## Table 1

| | Crops | | |
|---|---|---|---|
| | Spinach | Sunny lettuce | Honewort |
| | Days for cultivation: 35 | Days for cultivation: 40 | Days for cultivation: 100 |
| | (leaves)g /strain | (leaves)g /strain | (leaves)g /strain $m^2$ |
| Cultivation soil in Example 1 | 12 | 210 | 3900 |
| Comparative Example 1 | 8 | 126 | 2730 |

As apparent from the result of the test described above, the amount of yield was improved by 30 to 40 % in the cultivation by using the material for cultivation soils of Example 1 as compared with the case of using ordinary soils in Comparative Example 1.

Example 2

100 kg of carbon powder, 0.45 kg of ammonium chloride, 0.6 kg of potassium chloride and 200 kg (liter) of water were added to 1000 kg of combustion ashes of coal and mixed and dried to desorb and neutralize electrostatic charges of the combustion ash and the carbon powder. The powder mixture comprising the combustion ash and the carbon used herein had the following physical properties.

```
Grain Size Distribution

    Silt fraction                          95    %

    Clay content                          .5    %

    Maximum grain size                     1    mm

    80 % grain size                        1    mm

    30 % grain size                      420    um

    Specific gravity of grain (GS)         2.7  g/cm³

    Wet density (Pt)                       1.0  g/cm³

    Dry density (Pd)                       0.8  g/cm³

    Porosity ratio (e)                     2

    Saturation degree (Sr)                30    %

Consistency

    Liquid limit (WL)                     30    %

    Plasticity limit (Wp)                 15    %

    Plasticity index (Ip)                 15    %
```

The powder mixture of the combustion ash and the carbon desorbed and neutralized for the electrostatic charges obtained by the method as described above were used and mixed with the following blending ratio in a mixer (omney mixer) and then pelletized by using a pan type pelletizer (manufactured by Daiichi Nenryo Co.).

| | |
|---|---|
| Mixed powder applied with charge desorption | 1000 kg |
| Cement | 150 kg |
| Potassium chloride | 0.3 kg |
| Magnesium chloride | 0.2 kg |
| Sodium chloride | 0.2 kg |
| Potassium chloride | 0.2 kg |
| Sodium sulfate | 0.017 kg |
| Ferric chloride | 0.017 kg |
| Citric acid | 0.015 kg |
| Cobalt chloride | 0.001 kg |
| Water | 200 kg (1) |

Then, cement was at first admixed to the powder mixture applied with electrostatic charge desorption and, subsequently, ingredients other than the cement previously dissolved in water were added and they were pelletized in a pan type pelletizer to obtain a material for cultivation soils having an inorganic continuous porous structure. The material for cultivation soils of the inorganic continuous porous structure had the following property.

| Property | |
|---|---|
| Specific gravity (apparent specific gravity in a spontaneously dried state) | 0.8 g/cm$^3$ |
| Specific surface area | 50 m$^2$/g |

| Chemical Ingredient of Tissue | |
|---|---|
| $SiO_2$ | 60 % |
| $Al_2O_3$ | 15 % |
| CaO | 20 % |
| MgO | 2 % |
| $Na_2O$ | 3 % |

Test Example 1

Zucchini was cultured in the material for cultivation soils obtained in Example 2 and in ordinary soils and sands as Comparative Example 2 and 3, by using a customary fertilizer: Hyponex (trade name) in any of the test cases and the amount of yield was compared between them and the results are shown in Table 2.

Table 2

| | Days for cultivation | Yield g/strain |
|---|---|---|
| Cultivation soils in Example 2 | 72 | 165 |
| Comparative Example 2 | 72 | 125 |
| Comparative Example 3 | 72 | 55 |

As apparent from the result of the test described above, the amount of yield in the cultivation by using the material for cultivation soils of Example 2 was improved by about 30 % as compared with comparative Example 2 of cultivation using ordinary soils and by about 300 % as compared with Comparative Example 3 of cultivation using sands.

Test Example 2

Gypsophila elegans Bieb and Zucchini were cultivated in the material for cultivation soils obtained in Example 2 and, in ordinary soils as Comparative Example 4, by using customary fertilizer: Hyponex (trade name) in any of test cases and the number of days till harvest was compared between them and the results are as shown in Table 3.

9

Table 3

| Crops | | |
|---|---|---|
| | Gypsophila elebans Bieb | Zucchini |
| | Number of days for cultivation planting to first flower pickling | Number of days for cultivation planting to first flower pickling |
| Cultivation soils in Example 2 Comparative Example 4 | 80 - 100 120 - 140 | 30 40 |

As apparent from the results of the test, the number of days for the cultivation can be shortened by from 10 to 40 days by cultivation using the material for cultivation soils in Example 2 as compared with the cultivation in Comparative Example 4 by using ordinary soils.

Test Example 3

Adsorption test was conducted for agricultural chemicals of "Shimazin (CAT 50%)" (manufactured by Takeda Engei Co.) and "Azac (MBPMC 40%, MCP hydrazine 30%) (manufactured by Sankyo Co.) by using the material for cultivation soils obtained in Example 2. As a test method, 1 liter of example water was poured into a vessel, to which 10 g of the material for cultivation soils in Example 2 was charged and stirred 24 hours and then filtered and analyzed. The test results are as shown in the the following Table 4.

Table 4

| | Before treatment (ug/l) | After treatment (ug/l) | Treating efficiency (%) |
|---|---|---|---|
| Shimazin Azac | 1.59 0.019 | 0.07 0.0004 | 96 98 |

As apparent from the test result, the agricultural chemicals could effectively be adsorbed by using the material for cultivation soils of Example 2. Further, when leaching test was conducted before and after the adsorption test, re-leaching was recognized in neither of the cases.

Example 3

100 kg of carbon powder, 0.45 kg of ammonium chloride, 0.6 kg of potassium chloride and 200 kg (liter) of water were added to 1000 kg of combustion ashes (incineration ash of sewage sludges), mixed and then dried to desorb and neutralize electrostatic charges of the combustion ashes and the carbon powder. The powder mixture of the combustion ash and carbon used herein had the same properties as those in Example 1.

The powder mixture of the combustion ash and the carbon in which electrostatic charges were desorbed and neutralized obtained by the method as described above was used and mixed with the following blending ratio in a mixer (omney mixer) and then pelletized by using a pan type pelletizer (manufactured by Daiichi Nenryo Co.).

| Mixed powder applied with charge desorption | 1000 kg |
|---|---|
| Cement | 150 kg |
| Potassium chloride | 0.3 kg |
| Magnesium chloride | 0.2 kg |
| Sodium chloride | 0.2 kg |
| Calcium chloride | 0.2 kg |
| Sodium sulfate | 0.017 kg |
| Ferric chloride | 0.017 kg |
| Citric acid | 0.015 kg |
| Cobalt chloride | 0.001 kg |
| Nitrogen | 2.2 kg |
| Phosphorus | 5 kg |
| Potassium | 5 kg |
| Water | 200 kg (1) |

Then, cement was at first admixed to the powder mixture applied with electrostatic charge desorption and, subsequently, ingredients other than cement previously dissolved in water were added and they were pelletized in a pan type pelletizer to obtain a material for cultivation soils in the form of an inorganic continuous porous structure. The property of the material for cultivation soils having the inorganic continuous porous structure was the same as in Example 1.

Test Example 1

Korai turfs were cultivated in pots using soils containing 1 % of the material for cultivation soils in Example 3 mixed with sand and soils only comprising sand as Comparative Example 5. In the cultivation, Korai turfs was cut out into each of nodes of runners under identical conditions and each node was planted in each pot. 300 ml of water was sprayed once for two days and customary fertilizer: Hyponex (trade name) in the form of a 100 times diluent solution was applied once for two weeks in about two months and a half. Then, harvest investigation was conducted for the covering area, length of root and weight of the living body and the results are as shown in the following Table 5.

Table 5

| Item<br>Cultivation soils | Covering area (cm$^3$) | Length Root (cm) | Living body weight (g) |
|---|---|---|---|
| Comparative Example 5 | 144 | 29 | 10.4 |
| Examples of the Invention | 300 | 30 | 28.8 |

As apparent from the test result, the covering area was increased by about twice, the living body weight was increase by about three times and the root length was somewhat longer upon cultivation by using the material for cultivation soils in Example 3 ,as compared with cultivation by using only the sands, and the effect regarding the growth of Korai turf was observed remarkably.

Test Example 2

Spinach, sunny lettuce and honewort were cultivated in the material for cultivation soils obtained in Example 3 and in ordinary soils as a Comparative Example 6 by using customary fertilizer: Hyponex (trade name) in any of the test cases and the amount of yield was compared between them. The results are as shown in Table 6.

Table 6

| | Crops | | |
|---|---|---|---|
| | Spinach | Sunny lettuce | Honewort |
| | Days for cultivation: 35 | Days for cultivation: 40 | Days for cultivation: 100 |
| | (leaves)g /strain | (leaves)g /strain | (leaves)g /m$^2$ |
| Example of the invention | 14.4 | 252 | 4600 |
| Comparative Example 6 | 8 | 126 | 2730 |

As apparent from the test result, the amount of yield was improved by 70 to 100 % upon cultivation using the material for cultivation soils of Example 3 as compared with Comparative Example 6 upon cultivation by using ordinary soils.

As has been described above, the material for cultivation soils according to the present invention comprises a honeycomb-like continuous porous structure in which particles of combustion ash and carbon powder are connected to each other by means of ettringite crystals and relatively large holes (macro apertures) are connected to each other with smaller pores (micro apertures), into a network-like shape so that cations of microelements required for the growth of plants contained in the material are electrically trapped and nitrogen, phosphorus and potassium are contained, if required, in the tissue and adsorbed thereon. Accordingly, the material for cultivation soils is highly permeable to water and air and also has satisfactory water retainability. In addition, it can physically adsorb other fertilizers and prevent the leaching thereof. Then, when the roots of plants release organic acids and absorb free water around the scarcely movable molecules of water, by eliminating electrostatic charges, microelement, fertilizer and oxygen can be absorbed. In addition, since the material is air permeable, onset of aerophobic bacteria can be prevented. In addition, since combustion ash, carbon powder, cement or lime, alkali metal and alkaline earth metal are used, the base substitution capacity is extremely large so that plants can easily absorb the nutrients. When bases adsorbed to soils or clays are leached, $H^+$ or $Al^{+3}$ are retained to exchange groups instead of the base ions, to prevent the soils from becoming acidic with low base saturation degree. Accordingly, mixing the material for cultivation soils with soils not suitable to the growth of various plants such as field crops, soils under remarkable acidification or soils lacking in microelements due to replant failure, they can be improved into soils suitable to the growth of plants. In addition, by using the material for cultivation soils alone not combined with existent soils for cultivating various kinds of plants, it is possible to prevent the replant failure, minimize the onset of disease and obtain outstandingly excellent state of growth as compared with the usual case and economize the fertilizer. Furthermore, since the particles of the combustion ash and the carbon powder are connected by means of acicular crystals such as ettringite into an agglomerated honeycomb-like continuous porous structure, the specific surface area is also increased thereby enabling to absorb the fertilizer, exchange and adsorb heavy metals in agricultural chemicals if they are dissolved into water and penetrated into soils, and also adsorb fatty acids in the agricultural chemicals with carbon to prevent them from leaching. Accordingly, the material for cultivation soils can prevent the eutriphication of rivers due to the leaching of a great amount of fertilizers and occurrence of circumstantial pollutions due to the leaching of heavy metals contained in a great amount of agricultural chemicals.

The material for cultivation soils according to the present invention can be produced simply by a process comprising mixing combustion ash, carbon powder, cement or lime and other mixing agents in an aqueous solution and drying them.

**Claims**

1. A material for cultivation soils characterized by having a continuous porous structure comprising combustion ash and carbon powder in which electrostatic charges are desorbed and neutralized and ettringite crystals for coagulating to connect the particles of said combustion ash and carbon powder to each other, said continuous porous structure comprising relatively large holes and smaller pores for connecting said holes to each other.

2. A material for cultivation soils as defined in claim 1, characterized in that the combustion ash and the carbon powder contain ammonium chloride and potassium chloride for desorbing and neutralizing electrostatic charges, and the ettringite crystals comprise either one of cement or lime, potassium chloride, magnesium chloride, sodium chloride, calcium chloride, sodium sulfate, ferric chloride, citric acid and cobalt chloride.

3. A material for cultivation soils as defined in claim 2, characterized in that from 3 to 50 % of carbon powder, from 2 to 30 % of either one of cement or lime, from 0.04 to 0.05 % of ammonium chloride, from 0.07 to 0.095 % of potassium chloride, from 0.015 to 0.02 % of magnesium chloride, from 0.015 to 0.02 % of sodium chloride, from 0.015 to 0.02 % of calcium chloride, from 0.001 to 0.002 % of sodium sulfate, from 0.0005 to 0.002 % of ferric chloride, from 0.0005 to 0.002 % of citric acid, from 0.0001 to 0.0002 % of cobalt chloride are contained based on the weight of the combustion ash.

4. A material for cultivation soils as defined in claim 1 or 2, wherein the continuous porous structure contains nitrogen, phosphorus and potassium.

5. A material for cultivation soils as defined in claim 4, characterized in that from 3 to 50 % of carbon powder, from 2 to 30 % of either one of cement or lime, from 0.04 to 0.05 % of ammonium chloride, from 0.07 to 0.095 % of potassium chloride, from 0.015 to 0.02 % of magnesium chloride, from 0.015 to 0.02 % of sodium chloride, from 0.015 to 0.02 % of calcium chloride, from 0.001 to 0.002 % of sodium sulfate, from 0.0005 to 0.002 % of ferric chloride, from 0.0005 to 0.002 % of citric acid, from 0.0001 to 0.0002 % of cobalt chloride, from 0.1 to 1 % of nitrogen, from 0.1 to 2 % of phosphorus and from 0.1 to 2 % of potassium are contained based on the weight of the combustion ash.

6. A material for cultivation soils as defined in claim 3 or 5, characterized in that the tissue comprises from 40 to 60 % of $SiO_2$, from 10 to 30 % of $Al_2O_3$, from 10 to 30% of CaO, from 2 to 3 % of MgO and from 3 to 10 % of $Na_2O$, based on the weight basis.

7. A material for cultivation soils as defined in any one of claims 1 to 6, characterized in that the diameter for each of the holes and the pores is from 5 to 7000 Å.

8. A material for cultivation soils as defined in any one of claims 1 to 7, characterized in that the specific surface area is within the range from 30 to 150 $m^2$/g.

9. A method of producing a material for cultivation soils characterized by mixing combustion ash and carbon powder in which electrostatic charges are desorbed and neutralized with one of cement or lime, potassium chloride, magnesium chloride, sodium chloride, calcium chloride, sodium sulfate, ferric chloride, citric acid, cobalt chloride and water, and drying them thereby forming a continuous porous structure comprising relatively large holes and smaller pores for connecting said holes to each other.

10. A method of producing a material for cultivation soils as defined in claim 9, characterized in that the combustion ash and the carbon powder are mixed with an aqueous solution of ammonium chloride and potassium chloride, drying them and then desorbing electrostatic charges and neutralizing them.

11. A method of producing a material for cultivation soils as defined in claim 10, characterized in that from 0.04 to 0.05 % of ammonium chloride, from 0.04 to 0.06 % of potassium chloride and from 15 to 25 % of water, each on the weight basis, are mixed with the combustion ash and the carbon powder.

12. A method of producing a material for cultivation soils as defined in any one of claims 7 to 9, characterized in that from 2 to 30 % of either one of cement or lime, from 0.03 to 0.035 % of potassium chloride, from 0.015 to 0.02 % of magnesium chloride, from 0.015 to 0.02 % of sodium

13

chloride, from 0.015 to 0.02 % of calcium chloride, from 0.001 to 0.002 % of sodium sulfate, from 0.0005 to 0.002 % of ferric chloride, from 0.0005 to 0.002 % of citric acid and from 0.0001 to 0.0002 % of cobalt chloride, are mixed based on the weight of the combustion ash and the carbon powder in which electrostatic charges are desorbed and neutralized.

13. A method of producing a material for cultivation soils as defined in any one of claims 9 to 11, characterized in that the combustion ash and the carbon powder in which electrostatic charges are desorbed and neutralized are mixed with either one of cement or lime, potassium chloride, magnesium chloride, sodium chloride, calcium chloride, sodium sulfate, ferric chloride, citric acid and cobalt chloride, as well as with nitrogen, phosphorus and potassium, together with water.

14. A method of producing a material for cultivation soils as defined in claim 13, characterized in that from 2 to 30 % of either one of cement or lime, from 0.03 to 0.035 % of potassium chloride, from 0.015 to 0.02 % of magnesium chloride, from 0.015 to 0.02 % of sodium chloride, from 0.015 to 0.02 % of calcium chloride, from 0.001 to 0.002 % of sodium sulfate, from 0.0005 to 0.002 % of ferric chloride, from 0.0005 to 0.002 % of citric acid, from 0.0001 to 0.0002 % of cobalt chloride, from 0.1 to 2 % of nitrogen, from 0.1 to 2 % of phosphorus, from 0.1 to 2 % of potassium and from 10 to 25 % of water are mixed, each on the weight basis, with the combustion ash and the carbon powder in which electrostatic charges are desorbed and neutralized.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | CHEMICAL ABSTRACTS, vol. 105, no. 20, 1986, abstract no. 177524m, Columbus, Ohio, US; & JP-A-61 087 776 (NIPPON KOKAN K.K.) 06-05-1986<br>* Abstract *<br>--- | 1 | C 05 G   3/04 |
| A | DE-A-3 242 482   (S.F.A.S.)<br>* Claim 1 *<br>----- | 1 | |

TECHNICAL FIELDS
SEARCHED (Int. Cl.5)

C 05 D
C 05 G

The present search report has been drawn up for all claims

| Place of search | Date of completion of the search | Examiner |
|---|---|---|
| THE HAGUE | 08-03-1991 | RODRIGUEZ FONTAO M-B. |

EPO FORM 1503 03.82 (P0401)